# EUROPEAN PATENT APPLICATION

(11) **EP 2 607 217 A1**
(43) Date of publication of application: **26.06.2013**
(21) Application number: 12198585.7
(22) Date of filing: 20.12.2012
(51) Int. Cl.: B62H 1/02

(54) **Kickstand**

(30) Priority: 23.12.2011 IT PD20110411
(71) Applicant: Ursus S.P.A., 36027 Rosa' VI (IT)
(72) Inventor: Ferronato, Sergio, 36027 Rosa' VI (IT)
(74) Representative: Modiano, Micaela Nadia

(57) **Abstract**

A kickstand, of the type comprising a bracket (11) for fixing to the lower part of a frame of a bicycle, a supporting rod (12) being articulated to the bracket (11) and having a pivoting head (13) which is coupled rotatably, by means of a pivot (14), between two opposite walls (15, 16) of an articulation fork (17) formed on a block (18) that protrudes from the bracket (11); a compartment (19) for the rotation of the pivoting head (13) is formed between the walls (15, 16); between the bracket (11) and the pivoting head (13), inside the block (18), reversible means (20) are provided for the snap locking of the supporting rod (12) in a configuration selected from a first configuration, for resting on the ground, and a second, lifted, configuration.

The free space of the compartment (19) for the rotation of the pivoting head (13) is at least partially occupied by an anti-pinching insert (21) that is fitted either on the pivoting head (13) or on the fork (17).

## Description

The present invention relates to a kickstand with adjustable length.

Generally a kickstand for a bicycle comprises a bracket for fixing to the lower part of a frame of a bicycle, a supporting rod being articulated to the bracket and having a pivoting head which is coupled rotatably, by means of a pivot, between two opposite walls of an articulation fork formed on a block that protrudes from the bracket.

Inside such block there are reversible means for the snap locking of the supporting rod in a configuration selected from a first one, for resting on the ground, and a second, lifted, one.

Such reversible locking means are constituted generally by a helical spring which is arranged within the block so as to push against a pad element, which can translate freely within the block in the direction of the thrust of the helical spring; a cam-like connection portion between two abutment surfaces, which are provided on the pivoting head, slides against the pad element; the abutment surfaces cooperate with spring and pad element to form means for the reversible locking of the supporting rod in the two aforementioned configurations of use.

Between the opposite walls of the fork there is a compartment for the rotation of the pivoting head.

The rotation of the supporting rod from one configuration to the other creates risks of pinching for a user in the free spaces between the pivoting head and the two opposite stroke limiting edges of the pivoting fork, where the pivoting head abuts, pushed by the action of the helical spring of the reversible locking means.

The aim of the present invention is to provide a kickstand that eliminates the above-mentioned risks of pinching for a user.

Within this aim, an object of the invention is to provide a kickstand that has the same functionalities and practicalities of similar conventional kickstands.

Another object of the invention is to provide a kickstand that can be made using known systems and technologies.

This aim and these and other objects which will become more evident hereinafter are achieved by a kickstand, of the type comprising a bracket for fixing to the lower part of a frame of a bicycle, a supporting rod being articulated to said bracket and having a pivoting head which is coupled rotatably, by means of a pivot, between two opposite walls of an articulation fork formed on a block that protrudes from said bracket, a compartment for the rotation of said pivoting head being formed between said walls, between said bracket and said pivoting head, inside said block, reversible means being provided for the snap locking of the supporting rod in a configuration selected from two configurations, a first configuration for resting on the ground and a second, raised configuration, said kickstand being **characterized in that** the free space of said compartment for the rotation of said pivoting head is at least partially occupied by an anti-pinching insert that is fitted either on said pivoting head or on said fork.

Further characteristics and advantages of the invention will become more apparent from the description of two preferred, but not exclusive, embodiments of the kickstand according to the invention, illustrated by way of non-limiting example in the accompanying drawings wherein:

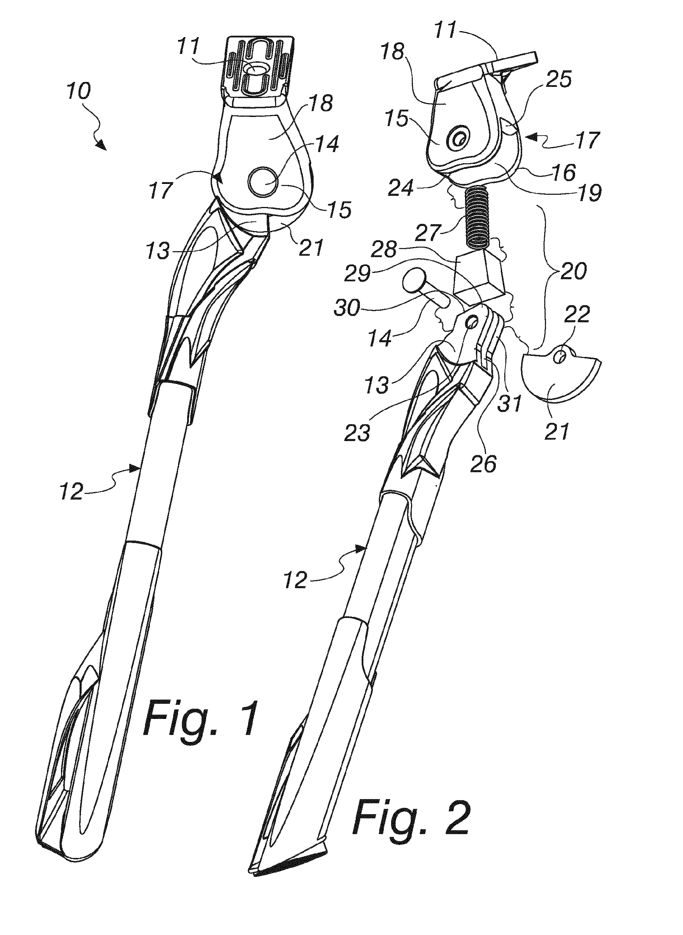

Figure 1 is a side view of a kickstand according to the invention in a first embodiment thereof;
Figure 2 is an exploded perspective view of the kickstand in Figure 1;

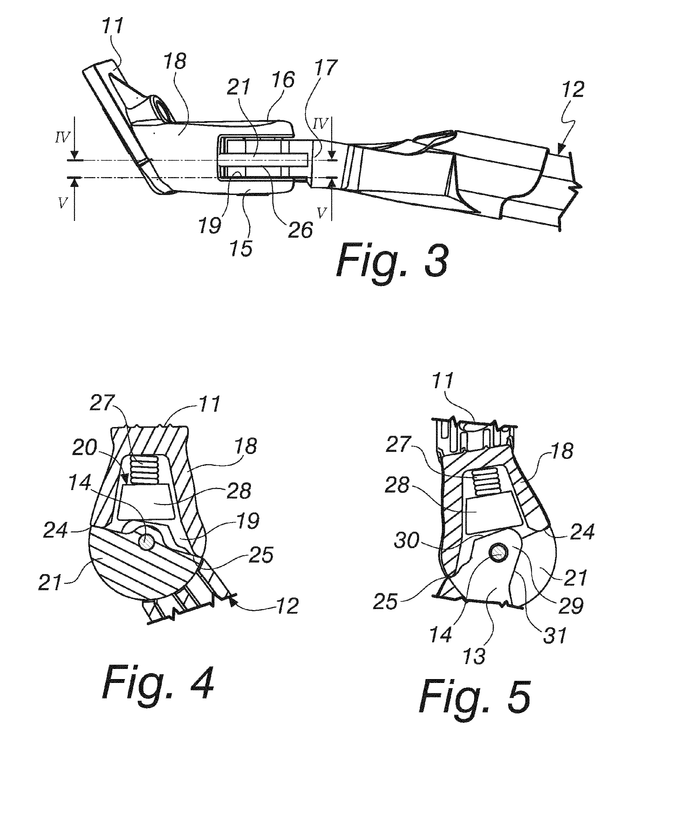

Figure 3 is a front elevation view of a portion of the kickstand according to the invention in the first embodiment thereof, in a first configuration of use;
Figure 4 is the cross-section indicated by the line IV-IV in Figure 3;
Figure 5 is the cross-section indicated by the line V-V in Figure 3;

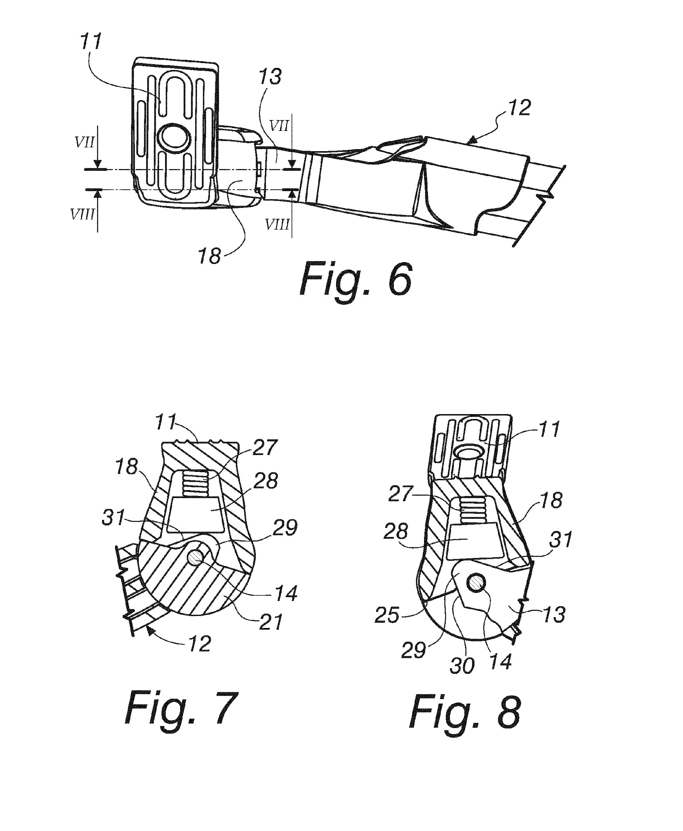

Figure 6 is a front view of the portion in Figure 3 of the kickstand according to the invention in the first embodiment thereof, in a second configuration of use;
Figure 7 is the cross-section indicated by the line VII-VII in Figure 6;
Figure 8 is the cross-section indicated by the line VIII-VIII in Figure 6;
Figure 9 is an exploded perspective view of a kickstand according to the invention in a second embodiment thereof;
Figure 10 is a front view of a portion of the kickstand according to the invention in the second embodiment thereof;
Figure 11 is the cross-section indicated by the line XI-XI in Figure 10;
Figure 12 is the cross-section indicated by the line XII-XII in Figure 10;
Figure 13 is the same view as Figure 11 with the kickstand in a different configuration of use;
Figure 14 is the same view as Figure 12 with the kickstand in a different configuration of use.

With reference to the figures, a kickstand according to the invention is generally designated in the first embodiment thereof with the reference numeral 10.

The kickstand 10 comprises a bracket 11 for fixing to the lower part of a frame of a bicycle, the latter not being shown for the sake of simplicity and understood to be conventional, a supporting rod 12 being articulated to the bracket 11.

The supporting rod 12 has a pivoting head 13 which is coupled rotatably by means of a pivot 14 between two opposite walls 15 and 16 of an articulation fork 17 which is formed on a block 18 that protrudes from the bracket 11.

Between the walls 15 and 16 a compartment 19 is formed for the rotation of the pivoting head 13.

Between the bracket 11 and the pivoting head 13, within the block 18, reversible means 20, better described hereinbelow, are provided for the snap locking of the supporting rod 12 in a configuration selected from two configurations, a first configuration for resting on the ground and a second, lifted configuration.

The free space of the compartment 19 for the rotation of the pivoting head 13 is partially occupied by an anti-pinching insert 21 that is fitted on the pivoting head 13.

In such first embodiment of the invention, which is to be understood as a non-limiting example of the invention, the anti-pinching insert 21 is constituted by a flat semicircular body which is provided with a through hole 22 at the reference axis of the semicircular portion of its perimeter.

Such through hole 22 is contoured to be coupled with the pivot 14, and corresponds to the through hole 23 which is formed in the pivoting head 13.

The anti-pinching insert 21 is contoured to extend between the two opposite stroke limiting edges 24 and 25, so as not to rotate.

The pivoting head 13 has a central slot 26, which extends along a plane perpendicular to the axis of the pivot 14, is contoured for the insertion of the anti-pinching insert 21 and is adapted to allow the rotation of the supporting rod 12 with respect to the anti-pinching insert 21 which is fixed, locked between the two stroke limiting edges 24 and 25.

The anti-pinching insert 21 prevents a user from inadvertently putting a finger in a space between a stroke limiting edge 24 and 25 and the pivoting head 13, since with its encumbrance the anti-pinching insert 21 occupies the space where the risk of pinching occurs and prevents the passage of the finger or other body part that might misguidedly be inserted in that space.

The reversible locking means 20 are constituted generally by a helical spring 27 which is arranged within the block 18 so as to push against a pad element 28, which can translate freely within the block in the direction of the thrust of the helical spring 27.

A cam-like connection portion 29 between two abutment surfaces 30 and 31, which are provided on the pivoting head 13, slides against the pad element 28. The abutment surfaces 30 and 31 cooperate with spring 27 and pad element 28 to form means for the reversible locking of the supporting rod in the two aforementioned configurations of use.

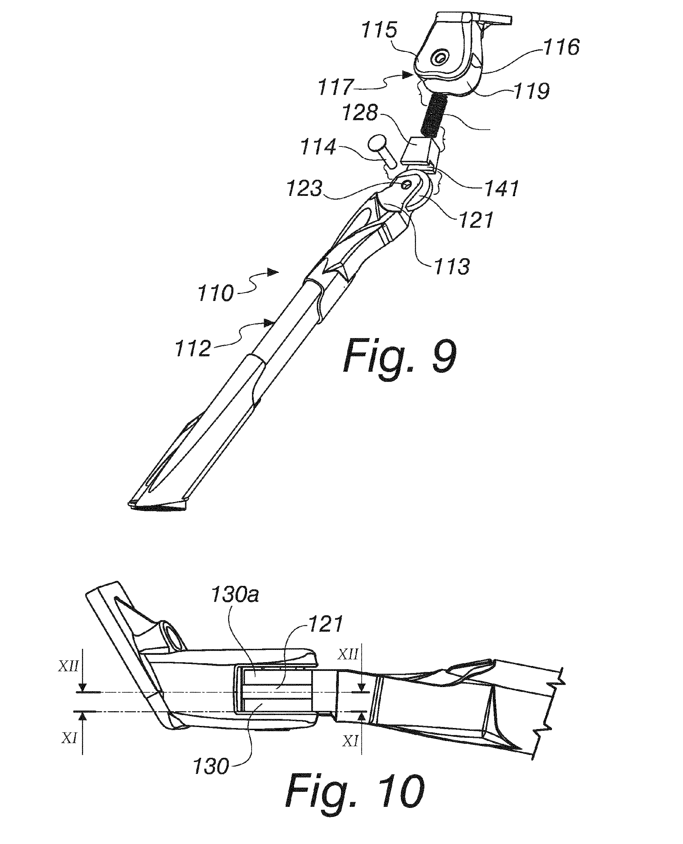

Figures 9 to 14 show a kickstand according to the invention in a second embodiment thereof, generally designated with the reference numeral 110.

In such second embodiment, also to be understood as a non-limiting example of the invention, the anti-pinching insert 121 is provided by a disk-like portion that lies substantially at the central plane of the pivoting head 113 and radially to the axis of the through hole 123 in the pivoting head 113.

The radius R of such disc extends so as to occupy as much space as possible in the compartment 19 between the walls 115 and 116 of the articulation fork 117.

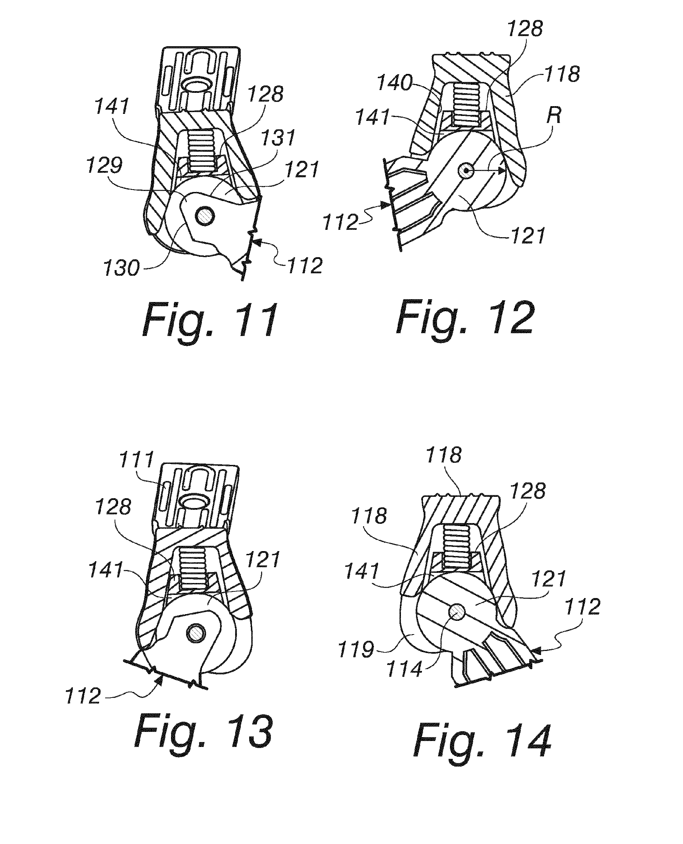

The disk-like portion extends radially beyond the corresponding dimensions of the cam-like connection portion 129 and of the two abutment surfaces 130 and 131, as in Figure 11.

Such disk-like portion subdivides each one of the two abutment surfaces 130 and 131, as well as the connection portion 129, into two parts, for example 130 and 130a in Figure 10.

The correct mutual contact and sliding between the abutment surfaces 130 and 131, and the connection portion 129, with the pad element 128 is ensured by the groove 141 that is provided in the pad element 128 and has a depth which is such as to allow the free positioning of the disk-like portion of the anti-pinching insert 121 without the latter compromising the functionality of the reversible locking means.

As shown in Figures 12 and 14, the disk-like portion is monolithic with the pivoting head 13, i.e. it is obtained by being molded simultaneously with such part of the supporting rod 112.

In a different embodiment of the invention, the disk-like portion 121 can be constituted by a complete disk, which is provided separately and then fitted on the pivot 114 in the manner described previously for the anti-pinching insert 21 in the first embodiment.

In practice it has been found that the invention fully achieves the intended aim and objects.

In particular, with the invention a kickstand is devised which eliminates the risks of pinching for a user in the area of articulation between the supporting rod and the bracket for fixing to the bicycle.

Moreover, with the invention a kickstand is provided which has the same functionalities and practicalities as similar conventional kickstands.

In addition, with the invention a kickstand has been devised that can be made using known systems and technologies.

The invention, thus conceived, is susceptible of numerous modifications and variations, all of which are within the scope of the appended claims. Moreover, all the details may be substituted by other, technically equivalent elements.

In practice the materials employed, and the contingent dimensions and shapes, may be any according to requirements and to the state of the art.

The disclosures in Italian Patent Application No. PD2011A000411 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A kickstand, of the type comprising a bracket (11) for fixing to the lower part of a frame of a bicycle, a supporting rod (12) being articulated to said bracket (11) and having a pivoting head (13) which is coupled rotatably, by means of a pivot (14), between two opposite walls (15, 16) of an articulation fork (17) formed on a block (18) that protrudes from said bracket (11), a compartment (19) for the rotation of said pivoting head (13) being formed between said walls (15, 16), between said bracket (11) and said pivoting head (13), inside said block (18), reversible means (20) being provided for the snap locking of the supporting rod (12) in a configuration selected from two configurations, a first configuration for resting on the ground and a second, raised configuration, said improved kickstand (10) being **characterized in that** the free space of said compartment (19) for the rotation of said pivoting head (13) is at least partially occupied by an anti-pinching insert (21) that is fitted either on said pivoting head (13) or on said fork (17).

2. The kickstand according to claim 1, **characterized in that** said anti-pinching insert (21) is constituted by a flat semicircular body which is provided with a through hole (22) at the reference axis of the semicircular portion of its perimeter, said through hole (22) being contoured for coupling to said pivot (14) and to a corresponding through hole (23) formed in the pivoting head (13).

3. The kickstand according to the preceding claims, **characterized in that** said anti-pinching insert (21) is contoured so as to extend between the two opposite stroke limiting edges (24, 25).

4. The kickstand according to the preceding claims, **characterized in that** said reversible locking means (20) are constituted by a helical spring (27) which is arranged within said block (18) so as to push against a pad element (28), which can translate freely within said block in the direction of the thrust of the helical spring (27), a cam-like connection portion (29) between two abutment surfaces (30, 31), which are provided on the pivoting head (13), sliding against the pad element (28).

5. The kickstand according to the preceding claims, **characterized in that** said pivoting head (13) has a central slot (26), which extends along a plane perpendicular to the axis of the pivot (14), is contoured for the insertion of the anti-pinching insert (21) and is adapted to allow the rotation of the supporting rod (12) with respect to said anti-pinching insert (21) locked between the two stroke limiting edges (24, 25).

6. The kickstand according to claim 1, **characterized in that** the anti-pinching insert (121) is provided by a disk-like portion that lies substantially at the central plane of said pivoting head (113) and radially to the axis of the through hole (123) in said pivoting head (113).

7. The kickstand according to claim 6, **characterized in that** said disk-like portion extends radially beyond the corresponding dimensions of the cam-like connection portion (129) and of the two abutment surfaces (130, 131).

8. The kickstand according to claims 5 and 6, **characterized in that** the correct mutual contact and sliding between the abutment surfaces (130, 131) and the connection portion (129), with the pad element (128) is ensured by a groove (141) that is provided in said pad element (128) and has a depth which is such as to allow the free positioning of the disk-like portion of the anti-pinching insert (121) without the latter compromising the functionality of the reversible locking means.

9. The kickstand according to claims 5 to 7, **characterized in that** said disk-like portion is monolithic with the pivoting head (13).

10. The kickstand according to claims 5 to 7, **characterized in that** the disk-like portion (121) is provided by a complete disk, which is provided separately and then fitted on the pivot (114).
